# FASCICULE DE BREVET EUROPEEN

(11) **EP 1 038 283 B1**
(45) Date de publication et mention de la délivrance du brevet: **28.05.2003**
(21) Numéro de dépôt: 98959960.0
(22) Date de dépôt: 11.12.1998
(51) Int. Cl.: G08G 1/0968

(54) **PROCEDE D'AIDE A LA NAVIGATION DANS UN SYSTEME EMBARQUE SUR UN VEHICULE AUTOMOBILE**
NAVIGATIONSHILFSVORRICHTUNG IN EINEM SYSTEM AN BORD EINES FAHRZEUGS
NAVIGATION AID METHOD IN A MOTOR VEHICLE ONBOARD SYSTEM

(30) Priorité: 12.12.1997 FR 9715804
(43) Date de publication de la demande: 27.09.2000
(73) Titulaire: Renault s.a.s., 92100 Boulogne Billancourt (FR)
(72) Inventeur: LETEMPLE, Jean-Pierre, F-92700 Colombes (FR); MOUSSA, Ralph, F-75016 Paris (FR); ROUSSEAU, Christian, F-92160 Antony (FR)
(86) Numéro de dépôt international: FR9802697
(87) Numéro de publication internationale: WO99031638

(56) Documents cités:
- EP-A- 0 595 685
- DE-A- 3 021 624
- DE-A- 4 208 277
- PATENT ABSTRACTS OF JAPAN vol. 098, no. 004, 31 mars 1998 & JP 09 311996 A (MATSUSHITA ELECTRIC IND CO LTD), 2 décembre 1997
- PATENT ABSTRACTS OF JAPAN vol. 097, no. 005, 30 mai 1997 & JP 09 007090 A (ALPINE ELECTRON INC), 10 janvier 1997
- DATABASE WPI Section PQ, Week 9713 Derwent Publications Ltd., London, GB; Class Q17, AN 97-137487 XP002074218 & JP 09 016887 A (SUMITOMO ELECTRIC IND CO)

## Description

L'invention concerne un procédé d'aide à la navigation par restitution d'informations routières, mis en oeuvre dans un système embarqué sur véhicule. Les systèmes d'aide à la navigation, proposés actuellement aux véhicules, remplissent quatre fonctions principales :
- l'information routière sur les conditions de circulation, ciblée sur un trajet précis, avec éventuellement évaluation d'un temps de parcours sur ce trajet ;
- le positionnement automatique du véhicule sur son trajet, notamment par rapport aux problèmes routiers afin de les éviter ou de les contourner ;
- le routage qui consiste à proposer un itinéraire pour rejoindre une destination déterminée ;
- le guidage aux intersections pour rejoindre la destination demandée.

Le but de cette aide à la navigation est de permettre au conducteur du véhicule ainsi équipé de se rendre à la destination choisie le plus rapidement possible et dans des conditions de sécurité et de confort maximaux.

Tout système de navigation s'appuie sur une base de données plus ou moins détaillée, décrivant tout ou partie du réseau routier. Plus la description du réseau routier doit être précise, plus la base de données de navigation doit mémoriser d'informations, augmentant ainsi la puissance de l'unité électronique de traitement, le coût de maintenance et le coût de communication pour les systèmes recevant leurs informations trafic depuis un central téléphonique.

Actuellement, il existe des systèmes s'appuyant sur des bases de données détaillées, décrivant finement les axes du réseau routier par des vecteurs, conformément au standard G.D.F.. Ils permettent d'obtenir une grande précision sur la position du véhicule sur le réseau routier, ainsi que sur les informations de routage/guidage ou sur les informations trafic diffusées. Mais leur prix est élevé.

Il existe également des systèmes de navigation utilisant des bases de données simplifiées, tels que celui décrit dans le brevet publié sous le numéro FR 92 13006 qui propose un mode de guidage exploitant directement un point de localisation par Global Positioning System, G.P.S., et s'appuyant sur une information de type panneaux directionnels par affichage simplifié des noms de directions ou synthèse de parole, ou tel que le système CARMINAT INFO TRAFIC de RENAULT qui offre des informations sur le trafic routier captées par un récepteur embarqué de type RDS-TMC (Radio Data System-Trafic Message Channel) utilisant un protocole spécifique TMC (Trafic Message Channel).

Un premier document JP 09 311 996 enseigne un dispositif de navigation avec positionnement d'un véhicule sur une carte par l'intermédiaire d'un GPS.

Ce dispositif comprend un système d'alerte de l'usager lorsque la vitesse instantanée du véhicule est dangereusement supérieure à la vitesse moyenne du tronçon routier parcouru, cette vitesse moyenne étant reçu d'un centre d'information routière.

Un deuxième document JP 09 007 090 enseigne un dispositif de navigation permettant de prédire les conditions de circulation sur les tronçons routiers à partir d'un calcul statistique.

Ce calcul statistique est basé sur la mesure et la mémorisation de tous les temps de parcours réalisés par le véhicule sur les différents tronçons routiers.

Généralement, ces systèmes s'appuyant sur des bases de données simplifiées présentent une architecture plus simple et moins onéreuse que les systèmes précédents, tout en permettant cependant une description suffisamment précise du réseau routier pour assurer les fonctions de guidage et d'informations routières. En effet, le système doit savoir sur quelle route se trouve le véhicule pour le guider et pour lui restituer une information de trafic routier filtrée, c'est-à-dire correspondant à son propre trajet prédéfini.

Un premier problème que ne résolvent pas les systèmes d'aide à la navigation actuels concerne la présentation d'informations routières sur un trajet déjà connu du conducteur du véhicule, qu'il pourrait désigner de façon aisée.

Ce problème concerne essentiellement les automobilistes qui utilisent leur véhicule principalement sur des trajets qu'ils empruntent fréquemment, du domicile au lieu de travail par exemple et réciproquement. Dans ces déplacements quotidiens sur un trajet connu, l'automobiliste souhaite disposer d'une information routière très ciblée, sans avoir à indiquer de façon précise et détaillée les différentes routes constituant ce trajet. Grâce à cette information sur le trafic concernant son itinéraire usuel, il peut prendre la décision d'emprunter ou non un trajet alternatif.

Les systèmes connus ne permettent pas de désigner aisément un itinéraire dans un but de restitution d'informations routières et n'avertissent pas le conducteur de l'état du trafic, pour qu'il emprunte un autre itinéraire en cas de trafic inhabituellement dense. En effet, quand les systèmes permettent la désignation d'un itinéraire, cela demande généralement des manipulations complexes, à partir d'un clavier, ou de boutons ou d'une commande manuelle sans volant. Le conducteur saisit les points de départ et d'arrivée, des points intermédiaires par le biais de menus par exemple ; cette programmation de proche en proche peut s'avérer contraignante dans le cas de longs trajets urbains et ne pas correspondre exactement au trajet réel qu'emprunte le conducteur du véhicule.

Avec un système s'appuyant sur une base de données simplifiée, le conducteur ne peut identifier avec suffisamment de précision l'axe sur lequel il circule ; en conséquence il ne pourra pas bénéficier de la prestation d'identification automatique d'itinéraire.

En plus de ce problème de désignation d'un itinéraire, se pose un deuxième problème de restitution des informations routières par des terminaux existants, par exemple utilisant le canal hertzien RDS-TMC. Cette restitution est difficilement compréhensible car les problèmes sont localisés sur le réseau routier par référence à des noms géographiques, de rues, de routes, de sites, ..., restituées sous forme de texte ou de synthèse vocale. Or, d'une part le conducteur doit rester concentré sur la route et d'autre part, il est incapable de savoir s'il est concerné par un embouteillage s'il ne connaît pas l'endroit annoncé.

Lorsque les problèmes routiers sont localisés sur des fonds de carte, apparaissant sur un écran, la lisibilité de cette solution en conduisant n'est pas très bonne et peut détourner l'attention du conducteur.

Un autre problème se pose quand le conducteur du véhicule souhaite aussi connaître avec précision le temps de parcours correspondant au temps nécessaire au véhicule pour atteindre sa destination à partir de sa position actuelle et résultant des informations trafic, afin de décider de son itinéraire. Or, actuellement, ou bien les systèmes délivrent un temps de parcours approximatif variant de façon discrète à chaque franchissement, par le véhicule, d'un pôle de diffusion RDS-TMC, ou bien les systèmes équipés d'une base de données simplifiée ne délivrent pas une information de localisation précise du véhicule sur le parcours.

Le but de l'invention est tout d'abord de proposer un procédé d'aide à la navigation embarqué sur véhicule permettant à l'utilisateur de désigner facilement un itinéraire destiné à être stocké de façon permanente, pour pouvoir le rappeler à la demande et connaître l'information routière le concernant. Ce procédé est capable de plus d'établir des conditions moyennes de trafic routier sur cet itinéraire et de conseiller l'automobiliste sur l'opportunité d'emprunter un autre trajet en cas de détérioration du trafic par rapport à ces conditions moyennes.

L'invention résout également le problème de la restitution des informations routières à l'automobiliste en repérant les événements routiers par la distance, éventuellement le temps de parcours, les séparant du véhicule le long de l'axe sur lequel il circule.

L'invention concerne de plus un procédé permettant de donner à l'automobiliste un temps de parcours pour rejoindre sa destination prenant en compte l'état du trafic et sa position précise sur le réseau routier.

Ce procédé s'appuie aussi bien sur des bases de données détaillées que sur des bases simplifiées à condition de prévoir une modélisation des différentes routes du réseau routier.

Pour cela, l'objet de l'invention est un procédé de navigation mis en oeuvre par un système embarqué sur véhicule, comportant au moins un module de localisation du véhicule, un récepteur d'informations routières et une base de données de navigation modélisant le réseau routier, caractérisé en ce qu'il comporte une phase permanente d'apprentissage composée des étapes suivantes :
- identification automatique des tronçons routiers au cours d'au moins un déplacement du véhicule sur le réseau routier ;
- établissement des conditions moyennes de trafic routier sur lesdits tronçons routiers identifiés, par mesure du temps de parcours réel lorsque le véhicule franchit le tronçon, et à partir des temps de parcours diffusés par un opérateur de service de type RDS-TMC ou GSM par exemple ;
- mémorisation éventuelle d'un itinéraire à partir de tronçons routiers identifiés ;
et une phase de restitution, sous forme vocale, graphique ou textuelle, de l'information routière sur ledit itinéraire.

Selon une autre caractéristique de l'invention, le procédé comporte une étape de restitution des informations routières avec positionnement des événements de trafic par leur distance par rapport à la position du véhicule, ou par calcul du temps de parcours les séparant du véhicule.

D'autres caractéristiques et avantages de l'invention apparaîtront à la lecture de la description des différents modes de fonctionnement du procédé, illustrée par les figures suivantes qui sont :
- figure 1 : un schéma électronique d'un exemple de réalisation d'un système de navigation mettant en oeuvre un procédé selon l'invention ;
- figure 2 : un exemple de réalisation d'une route, dans une base de données simplifiée ;
- figures 3, 4, 5 et 6 : des exemples non limitatifs de modélisation du réseau routier selon l'invention, dans une base de données simplifiée.

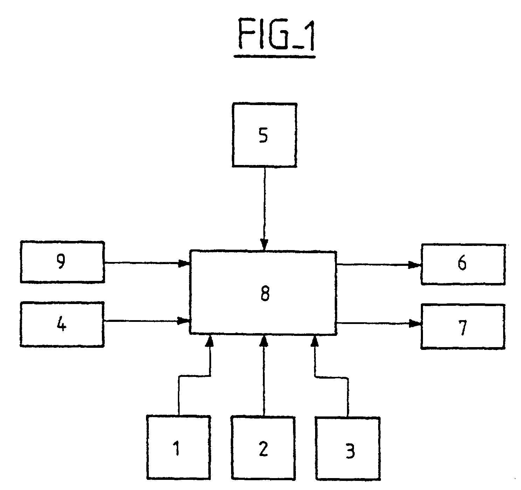

Les différents éléments constitutifs d'un système embarqué d'aide à la navigation, représentés sur le schéma de la figure 1, sont les suivants :
- un module 1 de localisation, tel qu'un système de radio-localisation absolue par satellites GPS (Global Positioning System) ou par balises au sol, couplé de préférence à des capteurs d'estime, un gyromètre et/ou un odomètre par exemple, qui permettent de suivre et d'entretenir en permanence la localisation du véhicule lorsque les signaux de radio-localisation ne sont pas reçus par le système embarqué ;
- deux moyens 2 et 3 de mémorisation, dont le moyen 2 contient des bases de données cartographiques, décrivant le réseau routier à des fins de guidage et des bases de données support de l'information trafic, et dont le moyen 3 est réinscriptible et non volatil, et sert au stockage d'itinéraire et des données sur les temps de parcours associées ;
- au moins un module 4 de commande, servant d'interface avec l'utilisateur automobiliste et constitué par exemple par des touches en face avant d'un boîtier ou sur le tableau de bord, par une commande déportée sous le volant, ou encore par une télécommande infrarouge, permettant aux autres passagers du véhicule d'accéder aux commandes du système de navigation ;
- un module 5 de réception, et éventuellement de décodage, de l'information routière, de type connu tel le RDS-TMC, SWIFT, DAB, GSM, Beacons, ... ;
- un module 6 de restitution d'informations visuelles, tel un afficheur ou un écran ;
- un module 7 de restitution sonore d'informations, tel un module de synthèse de parole ;
- une unité centrale électronique 8 de calcul, reliée à tous les éléments précédents, pour gérer l'ensemble de leurs entrées et sorties, le calcul d'itinéraire, la progression par rapport à l'itinéraire calculé, le guidage, l'identification d'itinéraire, entre autres ;
- un module 9 de mesure du temps, tel une horloge exploitée par l'unité de calcul.

Le procédé de navigation selon l'invention comporte une première phase dite d'apprentissage au cours de laquelle il réalise l'identification automatique des axes ou tronçons du réseau routier sur lesquels se déplace le véhicule, dès la mise sous tension du système embarqué, grâce au module 1 de localisation et à un algorithme d'identification d'itinéraire, implanté dans l'unité de calcul 8.

Simultanément, il établit les conditions moyennes de trafic routier sur les tronçons identifiés en mesurant des temps de parcours réels. Il peut également établir les conditions moyennes de trafic routier à partir de l'information diffusée par un opérateur de service de type RDS-TMC ou GSM et envoyée, par le module 5 de réception et décodage d'informations de trafic, à l'unité de calcul 8, qui peut ainsi jour après jour établir des temps de parcours moyens sur ces tronçons, en fonction aussi de l'heure et éventuellement du jour de l'année. Si le module 5 de réception d'informations de trafic routier ne délivre pas des temps de parcours mais des informations événementielles de type ALERT C, l'unité de calcul 8 peut effectuer une analyse semblable. Par un processus d'apprentissage, le système établit les conditions normales de circulation et, en cas de problème important entraînant un changement des conditions de circulation, il propose un itinéraire alternatif à l'automobiliste.

Le procédé mémorise ensuite éventuellement au moins un itinéraire à partir de certains tronçons identifiés, pour lequel, dans une seconde phase, il restituera des informations routières, du routage ou du guidage.

Selon l'invention, le procédé de navigation propose un nouveau mode de saisie et de mémorisation d'un itinéraire, puisque l'automobiliste n'a plus à désigner tous les axes et carrefours de son itinéraire habituel, le procédé de navigation identifiant lui-même les axes et carrefours traversés lors d'un déplacement du véhicule et les mémorisant pour établir un itinéraire.

Cette étape de mémorisation automatique d'un itinéraire, au cours d'un déplacement du véhicule, peut être réalisée selon plusieurs variantes. Selon une première variante, basée sur un fonctionnement automatique, dès la mise sous tension du système, l'origine de l'itinéraire qui est prise en compte est la position géographique du véhicule obtenue à l'aide du module 1 de localisation GPS, puis le procédé enregistre les tronçons routiers successifs empruntés par le véhicule jusqu'à une condition de fin d'enregistrement. Cette condition peut être la coupure du contact moteur, associée à une temporisation et à une demande de validation de la position GPS de son véhicule, posée à l'utilisateur comme destination de l'itinéraire à identifier. En cas de non validation de cette destination, l'utilisateur est invité à choisir un autre point de l'itinéraire identifié que le système lui propose sur fond de carte par exemple. Il peut également choisir un autre point d'origine dans l'itinéraire identifié, figurant par exemple sur ce fond de carte, que celui localisé par GPS.

Selon une autre variante, à la mise sous tension du système de navigation, l'automobiliste programme le point d'origine de l'itinéraire à mémoriser, en choisissant la position courante donnée par le module de localisation GPS, ou choisit une autre origine sur le trajet qu'il emprunte. La validation du point d'arrivée peut se faire comme cela vient d'être décrit.

Selon une autre variante, le système laisse la possibilité à l'utilisateur de désigner lui-même une ou plusieurs parties de l'itinéraire quand il le souhaite ou quand l'identification est incertaine, en raison par exemple de perturbations extérieures détériorant sa fiabilité. Arrivé à destination, le système propose la mise dans la mémoire permanente 3 de cet itinéraire ainsi identifié.

Si le système est équipé d'une base de données de navigation de type détaillée, le procédé identifie avec exactitude l'itinéraire sur lequel circule le véhicule, par l'intermédiaire de son module 1 de localisation et d'une technique de recalage de trajectoire, dite "map matching". Ces bases de données détaillées couvrent généralement tout le réseau routier, au moins dans les zones urbaines et périurbaines.

Si le système est équipé d'une base de données de type simplifiée définie par les coordonnées X et Y des points, les carrefours extrémités et la longueur de la route, le recalage de trajectoire à l'aide de capteurs d'estime ne peut s'appuyer sur une représentation précise du réseau routier. Aussi, pour identifier automatiquement les itinéraires, le procédé comporte une étape préliminaire de modélisation des routes du réseau routier.

Cette modélisation peut s'opérer sous une forme compactée, par exemple, par une fonction dont la représentation géométrique s'approche de la réalité de la route à modéliser, par des carrefours d'extrémité et une incertitude maximale qui est fonction de la distance entre les deux carrefours, de la longueur de la route, et d'autres paramètres.

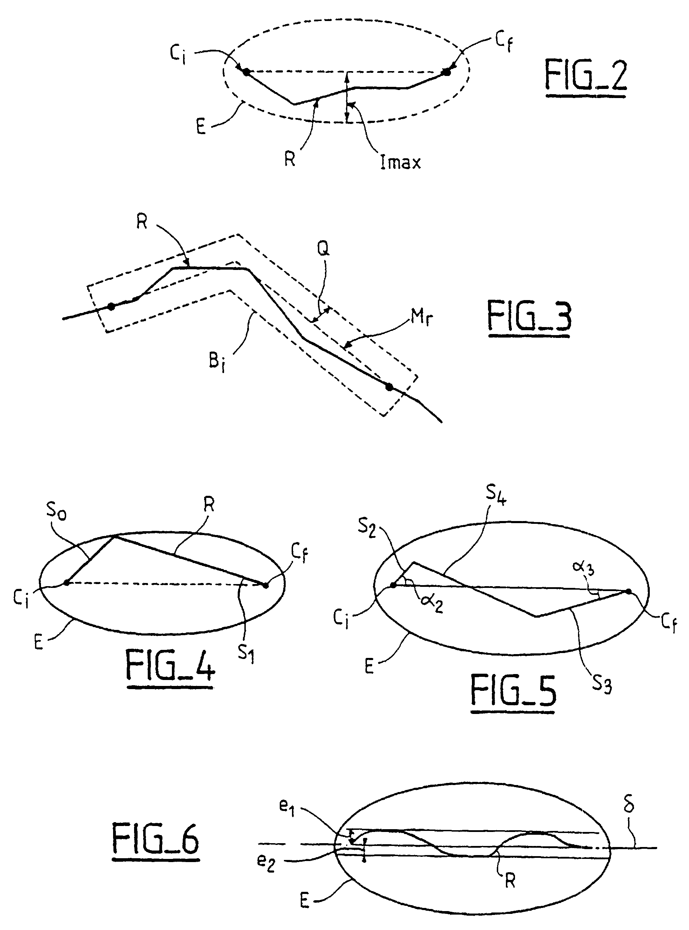

Le processus de modélisation sous une forme compacte des tronçons routiers de la base de données, est réalisé lors de la constitution de la base de données cartographiques de façon définitive. Dans une base de données de type GDF, une route est une succession de tronçons élémentaires ou vecteurs, reliés bout à bout. Plus la forme de la route est complexe, en raison de virages, plus il faut découper finement la représentation de la route, ce qui génère un nombre important de vecteurs. Dans un système simplifié, la route est définie par les coordonnées géographiques de ses extrémités, c'est-à-dire le carrefour initial Cᵢ et le carrefour final C_{f}, et par sa longueur réelle, ce qui définit une ellipse E, d'incertitude maximale Iₘₐₓ, dans laquelle se situe obligatoirement la route R comme le montre la figure 2. La modélisation selon l'invention permet de réduire sensiblement l'incertitude sur la position de la route sans augmenter le nombre de segments représentatifs. Pour cela, elle tient compte du fait qu'une majorité de routes ont des formes similaires, telles que lignes droites, un ou deux coudes, arc de cercle ..., que l'on peut classer en un petit nombre de modèles de route.

Le principe de cette modélisation consiste à rechercher, parmi les modèles pré-définis, le modèle le plus proche de la route considérée, en mesurant l'écart entre la route et le modèle, selon un seuil réglable en fonction de la précision recherchée, appelée qualité du modèle Q.

Si cet écart est trop important, la route doit être découpée en plusieurs tronçons que l'on modélisera à leur tour. Le résultat est l'obtention, pour chaque route, de son modèle Mᵣ et de la qualité Q associée, comme le montre la figure 3 représentant la modélisation d'une route R. A ce modèle est associé une bande d'incertitude Bᵢ, c'est-à-dire une surface optimisée incluant de façon certaine la vraie route, dont la largeur est égale à deux fois la qualité et qui est centrée sur le modèle.

La qualité peut être exprimée par une fonction globale dont la valeur est liée à l'ellipse d'incertitude initiale, à partir notamment de la distance maximale, d'un pourcentage de la largeur de l'ellipse et d'une combinaison linéaire de ces deux derniers paramètres.

Selon un premier modèle, la route R est composée de deux segments S₀ et S₁ à l'intérieur de l'ellipse E (figure 4).

Selon un deuxième modèle, la route est composée de trois segments, deux segments extrêmes S₂ et S₃ partant des carrefours extrémités, dont on connaît les angles α₂ et α₃ d'inclinaison par rapport à l'axe de l'ellipse d'incertitude, et un segment intermédiaire S₄ les reliant (figure 5).

Certaines routes au tracé tortueux ne peuvent être modélisées simplement, mais oscillent au voisinage de l'axe de l'ellipse E d'incertitude les incluant, comme le montre la figure 6. Leur modèle indique explicitement la valeur maximale de l'écart latéral de chaque côté e₁ et e₂ de l'axe principal δ de l'ellipse E.

Le procédé selon l'invention résout également le problème des excursions hors du réseau routier principal, empruntées par les automobilistes dans leurs trajets habituels entre leur domicile et leur travail, pour réaliser des raccourcis ingénieux par exemple. Les bases de données de navigation simplifiées s'appuient généralement sur le réseau routier principal, et sont donc proches des bases de données RDS-TMC supportant l'information-trafic. Quand une excursion du véhicule hors du réseau routier, renseigné par des informations trafic, est repérée par le système embarqué, un lien "hors réseau", présenté sous une forme caractéristique, est créé dans l'itinéraire mémorisé et apparaît à l'utilisateur lors de la consultation du trajet mémorisé. Bien qu'aucune information de trafic routier ne soit disponible sur les liens "hors réseau", il est possible d'extrapoler un retard ou un temps de parcours quand l'excursion hors réseau n'est pas trop longue, en observant l'état du trafic sur les routes renseignées autour de cette zone hors réseau, ou bien on peut utiliser les conditions moyennes établies par les mesures de temps de parcours.

Parallèlement à cette phase d'apprentissage, le procédé comporte une seconde phase de restitution de l'information routière sur l'itinéraire identifié et mémorisé, sous forme vocale, textuelle ou graphique grâce aux modules 6 et 7. Le procédé analyse l'état du trafic à la place de l'automobiliste et le conseille sur le trajet à emprunter. Il prévient que les conditions de circulation sont plus mauvaises que les conditions moyennes enregistrées, peut tester des itinéraires alternatifs et en proposer un à l'automobiliste si le gain de temps est supérieur à un seuil prédéterminé. En cas d'informations événementielles délivrées, le système peut également prévenir l'automobiliste de la survenue d'un événement exceptionnel, de type accident ou manifestation par exemple, en aval du véhicule.

Selon une autre caractéristique essentielle de l'invention, le procédé de navigation, mis en oeuvre par un système embarqué dont le module 5 de réception des informations routières les délivre sous forme événementielle, positionne les événements du trafic routier qui surviennent en aval du véhicule, par rapport à la position du véhicule, en distance et/ou en temps, à condition qu'il localise l'axe du réseau routier sur lequel circule le véhicule, avec suffisamment de fiabilité.

Dans le cas où le procédé réalise un suivi d'itinéraire, comme précédemment décrit, il avertit de l'existence d'un problème routier en aval du véhicule en donnant sa distance ou le temps de parcours par rapport à la position réelle du véhicule.

Par contre, le procédé de navigation peut ne pas effectuer un processus de suivi d'itinéraire mémorisé, donc ignorer le trajet que l'automobiliste va emprunter. Si un problème routier survient en aval sur l'axe qu'il emprunte, repéré par son nom de rue ou son numéro de route par exemple, le système de navigation selon une première variante de fonctionnement, signale cet évènement routier par sa distance au véhicule, et/ou par la durée de route avant de l'atteindre. Selon une deuxième variante de fonctionnement, le système indique avant chaque intersection de routes ou carrefour, les événements routiers existant sur chacune des directions possibles à partir dudit carrefour par leur distance au véhicule ou leur temps d'accès.

Une troisième variante du procédé d'avertissement et de positionnement relatif concerne les seuils d'éloignement ou de caractère dangereux qui peuvent être fixés pour la délivrance des informations sur les problèmes routiers. Ainsi, si le problème routier est trop éloigné du véhicule, le procédé ne délivre pas son information. De même, selon le caractère dangereux de l'événement, un avertissement plus ou moins pressant est délivré à l'automobiliste, sous forme sonore ou visuelle.

Pour remplir cette étape d'avertissement du conducteur, le procédé doit faire face à deux difficultés, dont la première est de pouvoir identifier l'axe sur lequel circule le véhicule. Sur les bases de données détaillées, cette identification est aisée, mais en cas de bases de données simplifiées, le procédé selon l'invention utilise des modèles de route selon le processus de modélisation décrit auparavant.

Le procédé selon l'invention permet aux automobilistes de désigner très facilement un itinéraire dans une optique de restitution d'informations routières sur cet itinéraire sur lequel ils se déplacent plus d'une fois et d'être avertis de l'état du trafic s'il est inhabituellement mauvais, en vue d'emprunter un meilleur itinéraire. Ce procédé de navigation enrichit ainsi les prestations offertes aux clients par un système de navigation, rend plus facile et plus précise l'utilisation de l'information routière, sans faire appel à des technologies coûteuses. Enfin, il améliore le routage et le guidage offerts par des systèmes de navigation à bases de données simplifiées.

## Revendications

1. Procédé de navigation mis en oeuvre par un système embarqué sur véhicule, comportant au moins un module de localisation du véhicule, un récepteur d'informations routières et une base de données de navigation modélisant le réseau routier, **caractérisé en ce qu'**il comporte une phase permanente d'apprentissage composée des étapes suivantes :
- identification automatique des tronçons routiers au cours d'au moins un déplacement du véhicule sur le réseau routier ;
- établissement des conditions moyennes de trafic routier sur lesdits tronçons routiers identifiés, par mesure du temps de parcours réel lorsque le véhicule franchit le tronçon, et à partir des temps de parcours diffusés par un opérateur de service de type RDS-TMC ou GSM par exemple ;
- mémorisation éventuelle d'un itinéraire à partir de tronçons routiers identifiés ;
et une phase de restitution de l'information routière sur ledit itinéraire sous forme vocale, graphique ou textuelle .

2. Procédé de navigation selon la revendication 1, **caractérisé en ce que** l'étape d'identification automatique des tronçons routiers au cours d'un déplacement du véhicule est réalisée à partir de la localisation instantanée du véhicule par le module (1) de localisation et d'un algorithme implanté dans l'unité de calcul (8) et s'appuyant sur la base de données de navigation.

3. Procédé de navigation selon les revendications 1 et 2, **caractérisé en ce que** l'étape de mémorisation d'un itinéraire à partir de tronçons routiers identifiés est effectuée automatiquement dès la mise sous tension du système de navigation à partir d'un point d'origine défini par la position géographique du véhicule localisé par le module (1) de localisation du système, jusqu'à une condition de fin d'enregistrement, qui est soit la coupure du contact moteur, associée à une temporisation et à une demande de validation, posée à l'utilisateur, de la position d'arrivée localisée par le module (1) de localisation, soit une décision de l'automobiliste en cours de route.

4. Procédé de navigation selon la revendication 3, **caractérisé en ce qu'**en cas de non validation de la destination de l'itinéraire à mémoriser, l'utilisateur est invité à choisir un autre point de l'itinéraire identifié que le système de navigation peut lui proposer sur un fond de carte.

5. Procédé de navigation selon les revendications 1 ou 2, **caractérisé en ce que**, lors de l'étape de mémorisation d'un itinéraire, l'automobiliste programme l'origine de l'itinéraire à mémoriser, en cours de route, cette origine étant la position courante du véhicule dont les coordonnées géographiques sont obtenues par le module (1) de localisation du système.

6. Procédé de navigation selon l'une des revendications 1 à 5, **caractérisé en ce que** l'automobiliste peut désigner lui-même au moins une partie de l'itinéraire à identifier, avec proposition de mémorisation en fin de parcours.

7. Procédé de navigation selon la revendication 1, le système de navigation étant équipé d'une base de données simplifiée, **caractérisé en ce qu'**il comporte une étape préliminaire de modélisation des routes du réseau routier, sous forme compactée par une fonction dont la représentation géométrique s'approche de la réalité de la route à modéliser, par des carrefours d'extrémité et une incertitude maximale qui est fonction de la distance entre les deux carrefours, de la longueur de la route, et d'autres paramètres.

8. Procédé de navigation selon l'une des revendications 1 à 7, **caractérisé en ce que**, lorsqu'une excursion du véhicule hors du réseau routier renseigné par des informations de trafic est repérée par le système de navigation, il comporte la création d'un lien "hors réseau" dans l'itinéraire mémorisé, qui apparaît, sous une forme caractéristique, à l'utilisateur, lors de la consultation du trajet mémorisé.

9. Procédé de navigation selon la revendication 1, **caractérisé en ce que** l'unité de calcul (8) mesure des temps de parcours moyens sur les tronçons de parcours identifiés empruntés et établit des conditions moyennes de temps de parcours sur ces tronçons.

10. Procédé de navigation selon la revendication 1, **caractérisé en ce que**, dans le cas d'un module (5) de réception d'informations trafic délivrant des informations sur les temps de parcours le long des tronçons routiers identifiés, l'unité de calcul (8) calcule à chaque emprunt de ces tronçons des temps de parcours moyens sur ceux-ci, éventuellement en fonction de l'heure et du jour de l'année.

11. Procédé de navigation selon la revendication 1, **caractérisé en ce que**, dans le cas d'un module (5) de réception d'information trafic délivrant des informations de type événementielles le long des tronçons routiers, l'unité de calcul (8) établit des conditions normales de circulation par un processus d'apprentissage, auxquelles elle comparera les conditions de circulation des parcours suivants des mêmes tronçons routiers.

12. Procédé de navigation selon l'une des revendications 1 à 11, **caractérisé en ce que**, lors de la phase de restitution de l'information routière sur l'itinéraire mémorisé, il analyse l'état du trafic, signale les conditions de circulation plus mauvaises que les conditions moyennes enregistrées, peut tester des itinéraires alternatifs et en proposer un à l'automobiliste.

13. Procédé de navigation selon l'une des revendications 1 à 12, **caractérisé en ce que**, dans le cas où il réalise un suivi d'itinéraire, il comporte une étape de restitution des informations routières avec positionnement des événements de trafic survenant en aval du véhicule par leur distance par rapport à la position du véhicule, ou par calcul d'un temps de parcours les séparant du véhicule.

14. Procédé de navigation selon l'une des revendications 1 à 12, **caractérisé en ce que**, dans le cas où le procédé n'effectue pas un processus de suivi d'itinéraire mémorisé, le système indique avant chaque intersection de routes ou carrefour, les évènements routiers existant sur chacune des directions possibles à partir dudit carrefour par leur distance au véhicule ou leur temps d'accès.

## Patentansprüche

1. Navigationsverfahren, das mittels eines im Fahrzeug mitgeführten Systems durchgeführt wird, welches wenigstens ein Modul zur Ortsbestimmung des Fahrzeuges, einen Empfänger für Verkehrsinformationen und eine Datenbank für die Navigation aufweist, die das Straßennetz modelliert, **dadurch gekennzeichnet, dass** es eine permanente Lernphase aufweist, die aus den folgenden Schritten besteht:
- automatische Identifikation der Straßenabschnitte während wenigstens eines Fahrvorgangs des Fahrzeuges auf dem Straßennetz;
- Erstellung der mittleren Bedingungen des Straßenverkehrs auf den identifizierten Straßenabschnitten durch Messung der tatsächlichen Fahrzeit während das Fahrzeug den Abschnitt durchfährt und ausgehend von den Fahrzeiten, die von einem Dienstanbieter wie zum Beispiel RDS-TMC oder GSM gesendet werden;
- gegebenenfalls Speicherung eines Leitweges ausgehend von den identifizierten Strassenabschnitten; und eine Phase aufweist der Wiedergabe der Strassen- und Verkehrsinformationen für diesen Leitweg in akustischer, grafischer oder schriftlicher Form.

2. Navigationsverfahren nach Anspruch 1, **dadurch gekennzeichnet, dass** der Schritt der automatischen Identifikation der Straßenabschnitte während eines Fahrvorgangs des Fahrzeuges durchgeführt wird ausgehend von der momentanen Ortsbestimmung des Fahrzeuges durch das Modul (1) der Ortsbestimmung und durch einen in die Recheneinheit (8) implantierten Algorithmus unter Zuhilfenahme einer Datenbank für die Navigation.

3. Navigationsverfahren nach Anspruch 1 und 2, **dadurch gekennzeichnet, dass** der Schritt des Speicherns eines Leitweges ausgehend von den identifizierten Straßenabschnitten automatisch durchgeführt wird sowie das Navigationssystem eingeschaltet wird ausgehend von einem Ursprungsort, der durch die geografische Position des Fahrzeuges bestimmt wird, der vom Modul (1) für die Ortsbestimmung des Systems ermittelt wird bis zu einer Bedingung der Beendigung der Speicherung, die entweder die Abstellung des Motors ist verbunden mit einer Verzögerung und mit einer Anforderung einer Bestätigung durch den Fahrer der von dem Modul (1) für die Ortsbestimmung ermittelten Position bei der Ankunft, oder eine Entscheidung des Fahrers während des Fahrvorgangs ist.

4. Navigationsverfahren nach Anspruch 3, **dadurch gekennzeichnet, dass** im Fall der Nichtbestätigung des zu speichernden Zielorts für den Leitweg der Fahrer aufgefordert wird, einen anderen Ort des identifizierten. Leitweges als denjenigen zu wählen, den ihm das Navigationssystem auf der Grundlage einer Landkarte vorschlagen kann.

5. Navigationsverfahren nach Anspruch 1 oder 2, **dadurch gekennzeichnet, dass** während des Schrittes der Speicherung eines Leitweges der Fahrer den Ursprungsort des zu speichernden Leitweges einprogrammiert während des Fahrvorgangs, wobei dieser Ursprungsort die laufende Position des Fahrzeuges ist, deren geografische Koordinaten vom Modul (1) für die Ortsbestimmung des Systems erhalten werden.

6. Navigationsverfahren nach einem der Ansprüche 1 bis 5, **dadurch gekennzeichnet, dass** der Fahrer selbst wenigstens einen Teil des zu identifizierenden Leitweges festlegen kann mit Vorschlag einer Speicherung am Ende des Fahrweges.

7. Navigationsverfahren nach Anspruch 1, bei dem das Navigationssystem mit einer vereinfachten Datenbank ausgerüstet ist, **dadurch gekennzeichnet, dass** es einen vorhergehenden Schritt der Modellbildung der Strassen des Straßennetzes in kompakter Form aufweist mittels einer Funktion, deren geometrische Darstellung an die tatsächliche zu modellierende Strasse angenähert ist, mittels Kreuzungen an den Enden und einer maximalen Unschärfe, die eine Funktion ist des Abstandes zwischen zwei Kreuzungen, der Länge der Strasse und anderer Parameter.

8. Navigationsverfahren nach einem der Ansprüche 1 bis 7, **dadurch gekennzeichnet, dass**, wenn ein Verlassen des von den Verkehrsinformationen empfohlenen Straßennetzes durch das Fahrzeug vom Navigationssystem festgestellt wird, es die Erzeugung eines Hinweises "außer Bereich" im gespeicherten Leitweg durchführt, der in charakteristischer Weise dem Fahrer zur Kenntnis gebracht wird während des Ablesens des gespeicherten Fahrweges.

9. Navigationsverfahren nach Anspruch 1, **dadurch gekennzeichnet, dass** die Recheneinheit (8) die mittleren Fahrzeiten misst für das Befahren der identifizierten Straßenabschnitte und mittlere Bedingungen für die Fahrzeiten für diese Straßenabschnitte erstellt.

10. Navigationsverfahren nach Anspruch 1, **dadurch gekennzeichnet, dass** in dem Fall, in dem das Modul (5) für den Empfang von Verkehrsinformationen Informationen liefert hinsichtlich der Fahrzeiten für die identifizierten Straßenabschnitte, die Recheneinheit (8) für jede Stelle dieser Abschnitte die mittleren Fahrzeiten für sie berechnet, gegebenenfalls als Funktion der Stunde und des Kalendertages.

11. Navigationsverfahren nach Anspruch 1, **dadurch**
**gekennzeichnet, dass** in dem Fall, in dem das Modul (5) für den Empfang von Verkehrsinformationen Informationen liefert hinsichtlich von Verkehrsereignissen auf den Straßenabschnitten, die Recheneinheit (8) die normalen Verkehrsbedingungen mittels eines Lernprozesses erstellt, mit denen es die Verkehrsbedingungen der nachfolgenden Fahrvorgänge auf denselben Straßenabschnitten vergleichen wird.

12. Navigationsverfahren nach einem der Ansprüche 1 bis 11, **dadurch gekennzeichnet, dass** während der Phase der Wiedergabe von Straßeninformationen für den gespeicherten Leitweg es den Zustand des Verkehrs analysiert, die Verschlechterung der Bedingungen für das Fahren im Vergleich zu den mittleren gespeicherten Bedingungen signalisiert, alternative Leitwege prüft und einen davon dem Fahrer vorschlägt.

13. Navigationsverfahren nach einem der Ansprüche 1 bis 12, **dadurch gekennzeichnet, dass** in dem Fall, in dem es eine Verfolgung des Leitweges durchführt, es einen Schritt der Wiedergabe von Straßeninformationen aufweist mit Positionierung von Verkehrsereignissen, die voraus liegen, durch deren Entfernung von der Position des Fahrzeuges oder durch Berechnung der Fahrzeit, die sie vom Fahrzeug trennen.

14. Navigationsverfahren nach einem der Ansprüche 1 bis 12, **dadurch gekennzeichnet, dass** in dem Fall, in dem das Verfahren keine Verfolgung des gespeicherten Leitweges durchführt, das System vor jedem Schnittpunkt von Strassen oder jeder Kreuzung die bestehenden Straßenereignisse auf jeder der möglichen von dieser Kreuzung ausgehenden Abzweigung anzeigt in Form ihrer Entfernungen vom Fahrzeug oder der Fahrzeiten bis zu deren Erreichen.

## Claims

1. A navigation method implemented by an in vehicle system comprising at least one vehicle location module, a road information receiver and a navigation database modelling the road network, **characterised in that** it comprises a permanent learning stage comprising the following steps:
- automatic identification of road sections during at least one journey by the vehicle on the road network;
- establishment of the average traffic conditions on these identified road sections, by measuring the actual time taken by the vehicle to travel the section, and from the travelling times distributed, for instance, by a service operator of the RDS-TMC or GSM type;
- possible memory storage of an itinerary from identified road sections;
and a stage of retrieval, in voice, graphical or text form, of the road information on this itinerary.

2. A navigation method as claimed in claim 1, **characterised in that** the stage of automatic identification of the road sections during a vehicle journey takes place from the instantaneous location of the vehicle by the location module (1) and an algorithrn input into the processing unit (8) and using the navigation database.

3. A navigation method as claimed in claims 1 and 2, **characterised in that** the stage of memory storage of an itinerary from identified road sections is carried out automatically, when the navigation system is switched on, from a starting point defined by the geographical location of the vehicle located by the system's location module (1) up to an end of recording condition which is either the switching off of the engine contract, associated with a delay time and a validation request, addressed to the user, of the point of arrival located by the location module (1) or a decision by the driver en route.

4. A navigation method as claimed in claim 3, **characterised in that** in the case of non-validation of the destination of the itinerary to be stored, the user is invited to choose another point of the identified itinerary that the navigation system may propose to him on a map background.

5. A navigation method as claimed in claims 1 or 2, **characterised in that**, during the stage of memory storage of an itinerary, the driver programs the starting point of the itinerary to be stored, en route, this starting point being the current position of the vehicle whose geographical coordinates are obtained by the system's location module (1).

6. A navigation method as claimed in one of claims 1 to 5, **characterised in that** the driver may himself indicate at least part of the itinerary to be identified, with a memory storage proposal at the end of travel.

7. A navigation method as claimed in claim 1, the navigation system being equipped with a simplified database, **characterised in that** it comprises a preliminary stage of modelling of the roads of the road network, in a compacted form by means of a function whose geometric representation is close to the reality of the road to be modelled, by end junctions and by a maximum uncertainty which is a function of the distance between the two junctions, the length of the road and other parameters.

8. A navigation method as claimed in one of claims 1 to 7, **characterised in that** when a deviation of the vehicle from the road network covered by traffic information is detected by the navigation system, it comprises the creation of an "out-of-network" link in the stored itinerary, which appears, in a charactesistic form, to the user when consulting the stored itinerary.

9. A navigation method as claimed in claim 1, **characterised in that** the processing unit (8) measures average travelling times on the identified itinerary sections travelled and establishes average travelling time conditions for these sections.

10. A navigation method as claimed in claim 1, **characterised in that**, in the case of a module (5) receiving traffic information and supplying information on travelling times along the identified road sections, the processing unit (8) calculates, each time these sections are travelled, average travelling times thereon, possibly as a function of the time and the day of the year.

11. A navigation system as claimed in claim 1, **characterised in that**, in the case of a module (5) receiving traffic information and supplying information of an event type along road sections, the processing unit (8) establishes normal driving conditions by a learning process and compares these conditions with the driving conditions of subsequent travel along the same road sections.

12. A navigation method as claimed in one of claims 1 to 11, **characterised in that**, during the stage of retrieval of road information on the stored itinerary, it analyses the state of the traffic, warns of driving conditions worse than the average conditions recorded, may test alternative itineraries and propose one of them to the driver.

13. A navigation method as claimed in one of claims 1 to 12, **characterised in that**, in the case it which it undertakes itinerary monitoring, it comprises a stage of retrieval of road information in which traffic events arising ahead of the vehicle are positioned by their distance from the position of the vehicle, or the time taken by the vehicle to reach them is calculated.

14. A navigation method as claimed in one of claims 1 to 12, **characterised in that**, in the case in which the method does not undertake a stored itinerary monitoring process, the system indicates, before each road intersection or junction, the road events on each of the possible directions from the junction in terms of their distance from the vehicle or the time taken to reach them.
